# EUROPEAN PATENT APPLICATION

(11) **EP 1 458 162 A2**
(43) Date of publication of application: **15.09.2004**
(21) Application number: 03300178.5
(22) Date of filing: 24.10.2003
(51) Int. Cl.: H04L 29/06

(54) **Non-repudiable distributed security policy synchronization**

(30) Priority: 28.10.2002 US 281195
(71) Applicant: Alcatel Canada Inc., Kanata, Ontario K2K 2E6 (CA)
(72) Inventor: Marquet, Bertrand, Ottawa, Ontario K1H 1B4 (CA); Gariador, Frederic, Ottawa, Ontario K1N 6L2 (CA)
(74) Representative: Lenne, Laurence

(57) **Abstract**

A system and method for providing distribution security measures in a distributed computer network environment. For consistency and ease of administration purposes, in a distributed computer network environment a security policy server can be used to maintain the global security policy of the environment. This server would need to distribute local security policies founded on the global policy to managed clients. The present invention provides a higher level of distribution security by utilizing robust cryptographic material in the distribution mechanism.

## Description

This invention relates generally to distributed computer network security, and more specifically to a system and method for building and using non-revocation tokens as an acknowledgement.

In many instances, it is necessary for an individual requesting access to a distributed computer network to identify himself as a permissible person. For example, an enterprise might wish to allow certain persons to access certain applications or information resources, or to perform various operations. Without the proper security measures, such enterprises might become open to the elements of fraud, imposture and eavesdropping.

Earlier systems and methods were developed to ensure that the parties requesting access were legitimate ones. These systems would determine whether the individual requesting access is a part of a selected group or not by using different identification methods (passwords, sensor cards, fingerprinting, etc.), and then allow or deny that user access to the network.

Primitive distributed computer network security systems were limited to the all-or-nothing methodology where all authorized personnel were permitted to practice the same network access rights. More sophisticated systems and methods were developed later to allow different persons different access rights. For example, a distributed computer network security system might grant one user read-only rights where it could grant another user read/write rights. These systems function by utilizing policies which consist of an unlimited number of guidelines that cover which users should be authorized to perform certain tasks, such as accessing certain applications or information resources, or performing various operations. They comprise a policy manager maintained on a security policy server to manage and distribute local policies to security managed clients. However, a mechanism to securely distribute those local policies is missing.

In a distributed computer network environment, security policy is jointly implemented by all the elements of the environment. For consistency and ease of administration purposes, a security policy server can be used to maintain the global security policy of the environment. This server would need to distribute local security policies founded on the global policy to managed clients.

A system and method would be desirable where adequate distribution security measures were provided. The present invention addresses these necessities and provides a higher level of security.

Therefore, one object of the present invention is to provide a method of distributing a security policy from a security policy server by increasing the security of the policy distribution

More precisely, the present invention provides a method of distributing a security policy from a security policy server to a managed element in a distributed computer network, comprising the steps of:
digitally signing, by said security policy server with a unique public key assigned thereto, a security policy change request for said managed element;
sending, by said security policy server, the digitally signed security policy change request to said managed element;
receiving, by said managed element, the digitally signed security policy change request;
determining, by said managed element, whether or not the digitally signed security policy change request should be accepted;
sending, by said managed element, and responsive to the digitally signed security policy change request being accepted, an acknowledgement to said security policy server; and
receiving, by said security policy server, said acknowledgement.

Thus, according to the present invention there is provided a method to increase the security of the policy distribution by use of robust cryptographic material in the distribution mechanism. This requires that each managed element and the security policy server must own an asymmetric key pair (cryptographic certificates may be used to facilitate operation); a security policy server must have access to a repository that contains public keys (or cryptographic certificates) of all the managed elements; each managed element must maintain a list of public keys (or cryptographic certificates) of the security policy servers that can change or update its own security policy; each policy change or update request sent by a security policy server must be characterized by a unique identifier.
Fig. 1 shows a plan view of one embodiment of the security policy server for use in the present invention;
Fig. 2 shows a plan view of one embodiment of a managed element for use in the present invention;
Fig. 3 shows a block diagram illustrating the policy distribution and the acknowledgement token interaction.
Fig. 4 (A and B) shows a flow diagram illustrating method steps of one embodiment of the present invention.

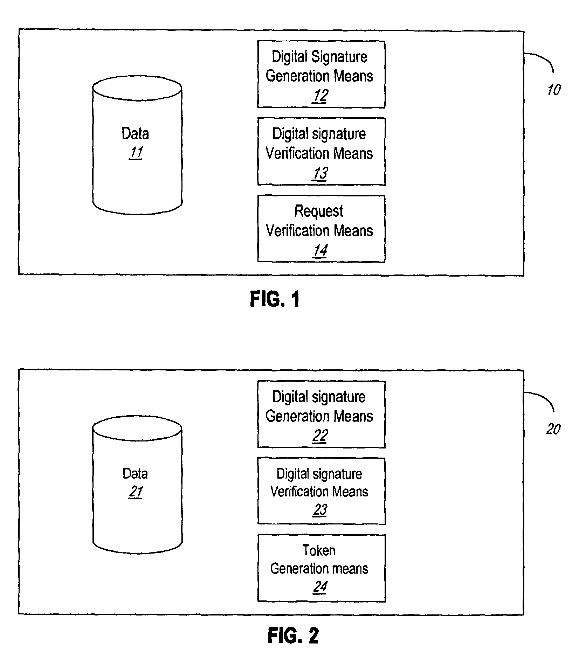

With reference to Figure 1 initially, shown is an illustration revealing some of the elements of a security policy server 10 comprising of storage device 11 (such as a database), digital signature generator 12, digital signature verification device 13, and request verification device 14.

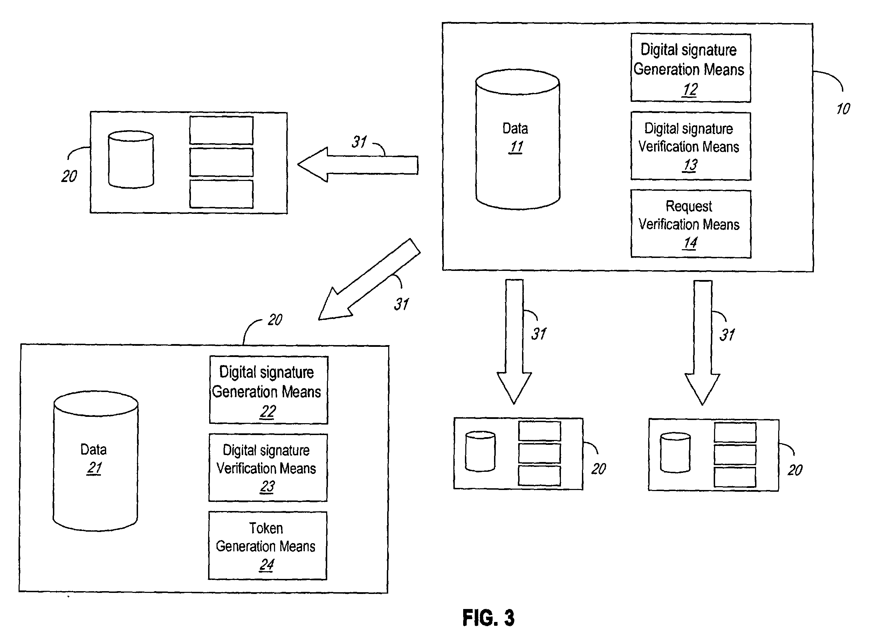

With reference to Figure 2, shown is an illustration revealing some of the elements of a managed element 20 comprising of storage device 21 (such as a database), digital signature generator 22, digital signature verification device 23, and token generator 24.

Fig. 3 illustrates the steps deployed by a policy change or update request of the security policy server 10 to a managed element 20 by use of a cryptographic mechanism to add authentication and non-repudiation functionality to the policy distribution process.

Using the digital signature generator 12, the security policy server 10 digitally signs, with its public key, each policy change or update request before sending it to its agent via a LAN 31. This request is stored by storage means 11 for future reference.

Other suitable communications media may be readily employed such as 10 or 1,000 Mbps wired LANs, RF communications such as wireless LAN or Bluetooth RF, IR communications, ISDN connections, non-standard based digital transmission means, serial digital interfaces, etc. for purposes of an example, a LAN will be referenced.

Each managed agent maintains a list of public keys (or cryptographic certificates) of the security policy servers 10 that can change or update its own security policy stored in its storage means 21. After reception of a request, the managed agent verifies the digital signature of the request, and whether that signature belongs to a security policy server 10 listed in its configuration to (1) ensure that the request is sent by a valid security policy server 10 and (2) to ensure that the request has not been tampered with during its transfer from the security policy server 10 to the managed element 20.

After the managed element 20 interprets this request, using the token generator 24, it builds a non-repudiation token and sends it back to the security policy server 10 as an acknowledgement. This token is composed of (1) a unique request identifier, (2) a cryptographic hashed value of the request sent by the security policy server 10, (3) a status code that indicates how this request has been completed, (4) the accurate date and time where the request has been processed, and (5) a digital signature of the described information.

After the security policy server 10 receives this token, it checks it to verify that the correct request has been processed by the managed element 20. This is done by calculating the cryptographic hashed value of the request stored by the policy server and comparing it to the hashed value provided in the token. Furthermore, the security policy server 10 checks the non-repudiation token to validate that the token has not been tampered with during transit.

The non-repudiation token is then stored by storage means 11 for future reference.

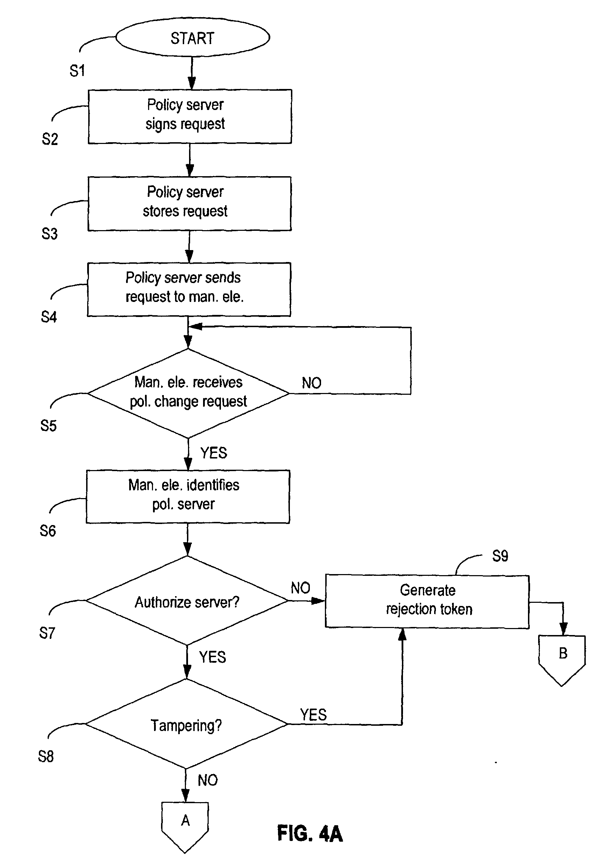

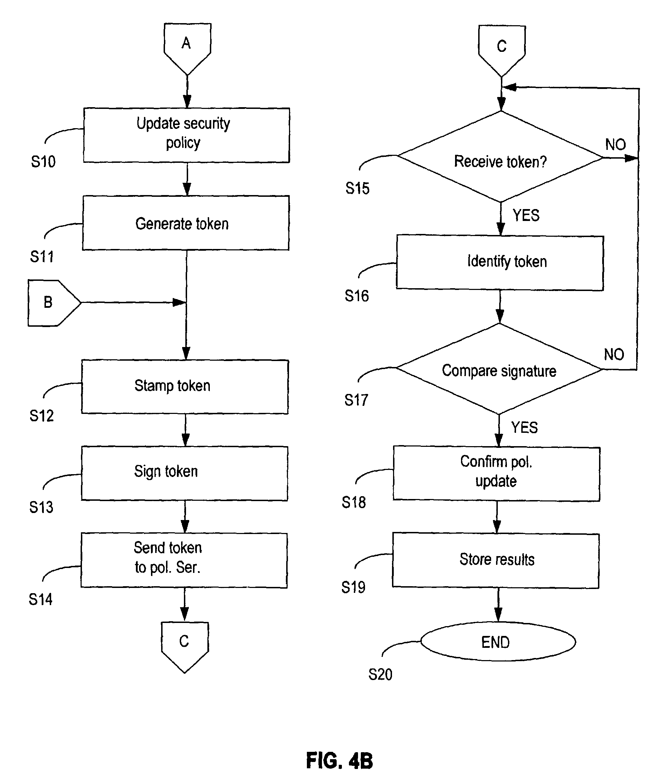

Next, a routine of the present embodiment of method steps to authorize a security policy change will be described referring to the flow diagram of Fig. 4 (A and B).

Usually, when a security policy server 10 wishes to send or update a security policy on one of the managed elements 20, it runs a routine from step S1 to step S4, during which the security policy server 10 initiates the transaction, digitally signs the security policy change request using the digital signature generation device 12, stores the request in storage means 11, and sends the security policy change request to the managed element 20.

When it is judged, by the managed element 20, in step S5 that a digitally signed security policy change request has been received, the managed element 20 executes a routine from step S6 to step S8 in order to determine whether or not the digitally signed security policy change request should be accepted. This is done by analyzing the digital signature in step S6 (by using the digital signature verification device 23) to identify the policy server from which it has been sent. In step S7, the managed element 20 determines if the security policy server identified in step S6 is authorized to make changes to its security policy. In step S8, the managed element 20 determines if the digitally signed security policy change request sent from the server identified in step S6 has been tampered with. If both of the conditions described above and executed in steps S6 through S8 are met, the request will be accepted. Otherwise, a rejection notification is generated in step S9 using the token generator 24.

Once a policy change request has been accepted, the managed element 20 updates its security policy in step S10, and generates an acknowledgement token using the token generator 24.

Once a token is generated in step S9 or step S11, the token undergoes steps S12 and S13 where integrated into it are (1) a unique request identifier, (2) a cryptographic hashed value of the request sent by the security policy server 10, (3) a status code that indicates how this request has been completed, (4) the accurate date and time where the request has been processed, and (5) a digital signature of the described information. This is also done by using the token generator 24.

When it is judged, by the security policy server 10, in step S15 that an acknowledgement has been received from the managed element 20, the security policy server 10 executes the routine of step S16 and step S17 in order to verify whether or not the digitally signed token should be accepted. In step S16, security policy server 10 identifies the token by using digital signature verification device 13. Then by comparing the digital signature of the managed element to that of the acknowledgement, security policy server 10 verifies whether or not the token has been tampered with. This is done in step S17.

After all these security measures have been taken, security policy server 10 verifies if the security policy change request was processed by calculating the cryptographic hash value of the stored security policy change request, and comparing that to the cryptographic hash value included in the acknowledgement. This is done in step S18.

Before terminating the procedure in step S20, security policy server 10 stores the outcome in step S19 using storage device 11 for future reference.

For simplification, the embodiment described above characterizes the distributed computer network access security system as the mother system. However, the invention is not limited in this respect. Other embodiments of the invention will be apparent to those skilled in the art from consideration of the specification and practice of the invention disclosed herein. For example, the invention may be implemented in a downstream manner, if suitable, to secure policy distribution for one or more particularly strategic nodes of a network infrastructure. The true scope of the invention is indicated by the claims.

## Claims

1. Method of distributing a security policy from a security policy server to a managed element in a distributed computer network, comprising the steps of:
digitally signing, by said security policy server with a unique public key assigned thereto, a security policy change request for said managed element;
sending, by said security policy server, the digitally signed security policy change request to said managed element;
receiving, by said managed element, the digitally signed security policy change request;
determining, by said managed element, whether or not the digitally signed security policy change request should be accepted;
sending, by said managed element, and responsive to the digitally signed security policy change request being accepted, an acknowledgement to said security policy server; and
receiving, by said security policy server, said acknowledgement.

2. Method as set forth in claim 1, further including determining whether or not the digitally signed security policy change request should be accepted by steps of:
determining, by said managed element after reception of the digitally signed security policy change request, whether or not the digitally signed security policy change request has been sent by said security policy server that is authorized to make changes to the security policy of the receiving managed element;
determining, by said managed element after reception of the digitally signed security policy change request, whether or not the digitally signed security policy change request has been tampered with.

3. Method as set forth in claims 1 or 2, further including referencing, via the signature of said security policy server, a list on said managed element of authorized security policy servers to determine if said security policy server is authorized to make changes on said managed element.

4. Method as set forth in any one of claims 1 to 3, further including generating, by said managed element, a non-repudiation token and including said token in said acknowledgement.

5. Method as set forth in claim 4, further including determining a cryptographic hash value of the security policy change request and including said value in said token.

6. Method as set forth in claim 4, further including integrating the unique security policy change request identifiers, status code, date, and time into said token.

7. Method as set forth in any one of claims 1 to 6, wherein said acknowledgement is digitally signed, by said managed element, before sending it.

8. Method as set forth in claim 7, further including comparing, by said security policy server, the digital signature of said managed element to that of said acknowledgement to verify that said token has not been tampered with.

9. Method as set forth in any one of claims 1 to 8, wherein said security policy server comprise a data storage device for storing the security policy change request before sending it and said non-reputation token upon receiving it.

10. Method as set forth in claim 9, further including determining whether or not the stored security policy change request was processed by calculating the cryptographic hash value of the stored security policy change request, and comparing that to said cryptographic hash value included in said acknowledgement.
